# EUROPEAN PATENT APPLICATION

(11) **EP 3 254 818 A1**
(43) Date of publication of application: **13.12.2017**
(21) Application number: 17174933.6
(22) Date of filing: 08.06.2017
(51) Int. Cl.: B28D 1/14, B28D 1/04, B23B 51/04

(54) **DRILL BIT**

(30) Priority: 10.06.2016 GB 201610155; 10.08.2016 GB 201613753
(71) Applicant: C4 Carbides Limited, Cambridge CB4 1TF (GB)
(72) Inventor: Duggan, Paul, Cambridge, CB4 1TF (GB); Ranjan, Amit, Cambridge, CB4 1TF (GB)
(74) Representative: Forsyth, Helen Jane

(57) **Abstract**

There is provided a drill bit (10) for cutting tiles comprising a hollow body portion (14) bearing an annular cutting surface (16) at one end and a wax plug (26) located within the hollow body portion (14), wherein an internal wall of the hollow body portion (16) has at least one region of reduced thickness (24) so as to provide one or more channels (32; 40; 50) along which melted wax can flow to reach cutting surface (16). The channels can be provided by an offset central passage within body portion (14), or as elongate grooves (40) around the internal wall of the hollow body portion (14). The channels can be helical grooves (50).

## Description

### Field of the invention

The present invention relates to drill bits, and in particular to drill bits having an annular cutting portion.

### Background to the invention

With drill bits used for cutting holes from tiles and the like, an annular cutting surface is provided which on rotation of the drill bit removes a circular disc from the tile or other object being drilled. Such drill bits are often known as hole saws and to prevent excessive heating of the abrasive cutting surface, a wax plug can be incorporated within the hollow annular body of the hole saw, the wax melting to provide a fluid that can cool the cutting surface by evaporation. Unfortunately as drilling takes place, loose waste material is generated which combines with the melted wax, eventually forming a slug located within the drill bit which blocks the flow of wax to the cutting surface. This prevents cooling taking place and heat damage occurs, shortening the useable lifetime of the drill bit.

### Summary of the invention

In accordance with the present invention, there is provided a drill bit for cutting tiles comprising a hollow body portion, typically cylindrical and so tubular, bearing an abrasive annular cutting surface at one end and a wax plug located within the hollow body portion, wherein an internal wall of the hollow body portion has at least one region of reduced wall thickness, thereby to provide a channel within the wall along which liquid wax can flow. This ensures that the wax can reach the region where cutting is taking place faster, which reduces heating occurring at the cutting surface, so improving the lifetime of the drill bit.

The region of reduced wall thickness preferably extends along the body portion at least as far as the wax plug.

The hollow body portion may be formed by a passage offset from the cross-sectional centre of the hollow body portion. As the drill bit is rotated by a drill or angle grinder, the rotation of the body portion with its region of reduced thickness provides a channel extending along the body portion and along which melted wax can flow to reach the cutting surface.

The passage is preferably offset from the cross-sectional centre of the hollow body portion by 50% or less of the width of the hollow body portion. Thus the passage may be offset from the cross-sectional centre of the hollow body portion so that the region of reduced wall thickness has a minimum wall thickness of 0.5mm.

The region of reduced wall thickness may be provided by at least one channel formed within the internal wall of the hollow body portion.

The hollow body preferably has an external diameter of between 3 to 16 mm, and more preferably between 3 to 7 mm with the wax cooling particularly effective for an external diameter of 7 mm or less.

If desired, a plurality of channels may be provided, preferably as circumferentially equispaced grooves around the internal wall of the hollow body portion.

The at least one channel may be a helical groove, and may be a reverse spiral thread such that the handedness of the helical groove is opposite to the sense of rotation of the drill bit during use. One or more helical grooves may be provided, for example as two, three or four threads.

The drill bit as aforesaid is particularly advantageous when used with a drilling tool, operating between 500 to 30,000 rpm such as corded and cordless drills, angle grinders and high speed rotary tools and of particular advantage for angle grinders operating between 8000 to 14000 rpm.

The invention will now be described by way of example with reference to the accompanying drawings in which:
Figure 1 is a perspective view of a first embodiment of a drill bit in accordance with the invention;
Figure 2 is an illustrative diagram showing an internal rotational path of the first embodiment;
Figure 3 is a perspective view of a second embodiment;
Figures 4 (a) and (b) are end and horizontal cross-sectional views respectively of the second embodiment;
Figure 5 is a perspective view of a third embodiment; and
Figures 6 (a) and (b) are end and horizontal cross-sectional views respectively of the third embodiment.

### Description

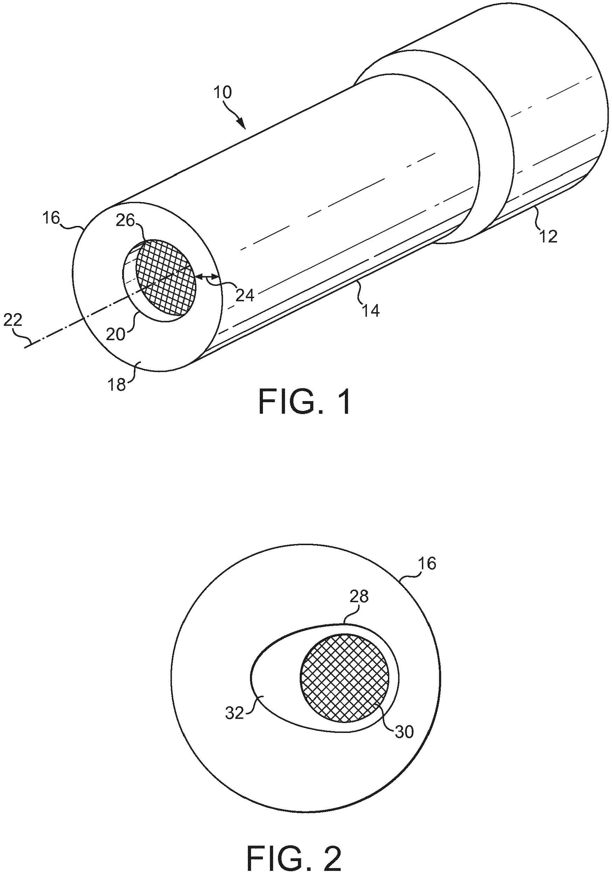

Figure 1 shows drill bit, or hole saw, 10 comprising a shank 12 for attachment to a manually held drill or angle grinder and an elongate thin-walled cylindrical tube 14 having an annular cutting surface 16 for engaging with a workpiece such as a tile or work surface. Typically the external diameter of tube 14 will be in the range 3mm to 16mm. Cutting surface 16 has abrasive cutting material 18 attached to it, typically in the form of adhered particles of granular diamond or tungsten carbide. Rotation of drill bit 10 by a drill or angle grinder connected to shank 12 rotates abrasive cutting surface 16 so removing circular discs of material from a workpiece.

Internal passage 20 through tube 14 is circular in cross-section and is offset by at most 50% from a centre axis 22 about which drill bit 10 rotates. Passage 20 is thus typically displaced between 0.1 to 1mm from centre axis 22 so that the wall thickness of tube 14 varies, with a minimum wall thickness of around 0.5mm at the narrowest region 24. Wax plug 26 is located within passage 20 close to cutting surface 16. Wax plug 26 gradually melts from heat generated by friction as cutting takes place, with liquid wax acting as a coolant on cutting surface 16 and passing between the granular cutting material to achieve cooling.

Rotation of drill bit 10 results in an elliptical rotation path 28 of offset passage 20 as shown in Figure 2. Where a slug 30 forms due to waste material mixing with liquid wax, slug 30 will be circular in cross-section and of reduced diameter compared to passage 20, leaving gap 32 unblocked and forming an internal channel within tube 14 that reaches wax plug 26. Thus during rotation there exists an internal channel extending within tube 14 along which wax can flow to reach cutting surface 16.

The creation of a channel that cannot be blocked by slug formation maintains wax cooling at abrasive cutting surface 16, ensuring cutting material 18 is not damaged through excess heat. This increases the working lifetime of drill bit 10 as can be seen in Table 1 below where the number of holes drilled through 8mm thick porcelain tiles at 1100rpm was compared for prior art hole saws with wax plugs and hole saws according to the invention with an offset internal passage and wax plug. Drill bits of external diameters 5mm and 6.5mm were compared, with the offset passage or offset hole version increasing the number of holes drilled by over 130%. This is a significant improvement on existing hole saws.

**Table 1: Comparison of holes drilled**

| Diameter | 3/16" or 5.0 mm | | ¼" or 6.5 mm | |
|---|---|---|---|---|
| Modification | without offset hole | with offset hole | without offset hole | with offset hole |
| Test 1 | 18 | 100 | 26 | 65 |
| Test 2 | 27 | 48 | 20 | 93 |
| Test 3 | 23 | 46 | 19 | 69 |
| Test 4 | 31 | 44 | 19 | 56 |
| Test 5 | | 57 | 17 | 56 |
| Test 6 | | | 32 | |
| Test 7 | | | 28 | |
| Average Life | 24.8 | 59.0 | 23.0 | 67.8 |
| Difference | ref. | 138% | ref. | 195% |

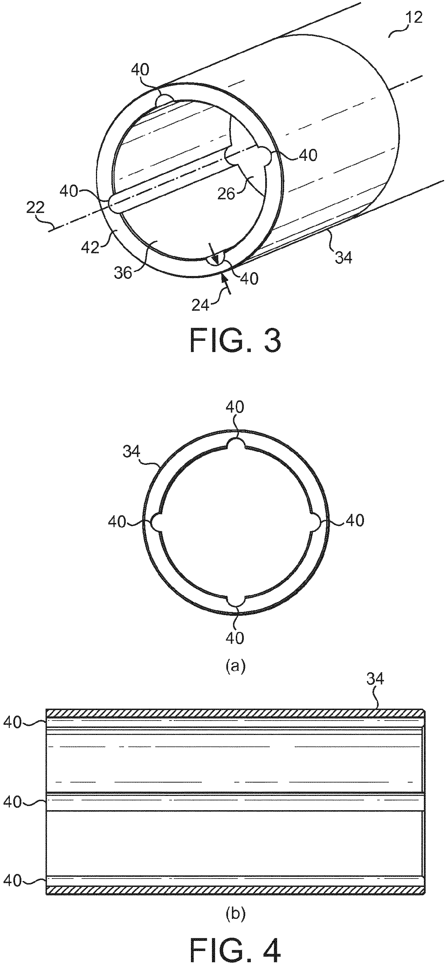

A second embodiment shown in Figures 3 and 4 comprises hollow tube 34 having an internal passage 36 centred on rotational axis 22 and which is formed with a plurality of internal semi-circular channels 40 extending along tube 34 towards shank 12, with the four channels 40 being circumferentially equispaced and providing multiple pathways for melted wax from plug 26 to reach a workpiece. Typically channels 40 extend into wall 42 to produce a minimum wall thickness 24 of 0.5mm, with the wall thickness in regions without a channel being around 1mm. Any slug formed from waste material combined with melted wax will sit within passage 36 and will not obstruct flow of liquid wax along channels 40.

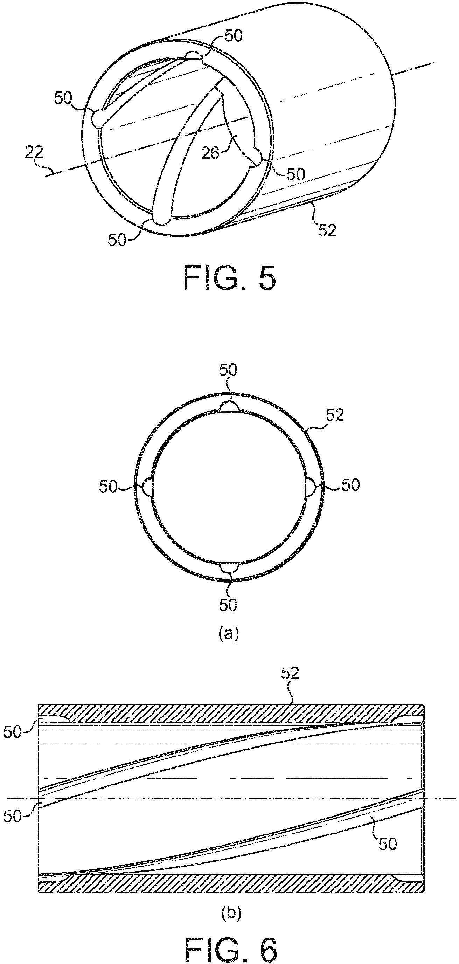

In a third embodiment shown in Figures 5 and 6, one or more internal helical channels 50 are provided within tube 52, such that the channels extend along and around the internal wall. The helical channel can be provided as a single thread, or as two, three or four multiple threads so as to provide multiple exit points adjacent cutting surface 16. The threads can be provided as reverse spiral threads, such that the handedness of the helical groove left-handed and opposite to the sense of rotation of the drill bit during use.

Increasing the number of helical threads or helical channels provides increased flow of coolant/lubricant, delivering more cooling.

## Claims

1. A drill bit (10) for cutting tiles comprising a hollow body portion (14) bearing an annular cutting surface (16) at one end and a wax plug (26) located within the hollow body portion (14), **characterised in that** an internal wall of the hollow body portion has at least one region of reduced thickness (24) and the hollow body portion (14) is formed by a passage (20) offset from the cross-sectional centre of the hollow body portion (14).

2. A drill bit according to claim 1, wherein the hollow body portion (14) is cylindrical.

3. A drill bit according to claim 1 or claim 2, wherein the region of reduced wall thickness (24) extends along the hollow body portion (14) at least as far as the wax plug.

4. A drill bit according to any of the preceding claims, wherein the passage (20) is offset from the cross-sectional centre of the hollow body portion (14) by 50% or less of the width of the hollow body portion.

5. A drill bit according to any of the preceding claims, wherein the passage (20) is offset from the cross-sectional centre of the hollow body portion (14) so that the region of reduced wall thickness (24) has a minimum wall thickness of 0.5mm.

6. A drill bit according to any of the preceding claims, wherein at least one channel (40) is formed within an internal wall of the hollow body portion.

7. A drill bit according to claim 6, wherein a plurality of channels (40) are provided.

8. A drill bit according to claim 7, wherein the plurality of channels (40) are circumferentially equispaced grooves around the internal wall of the hollow body portion (14).

9. A drill bit according to any of claims 6 to 8, wherein the at least one channel is a helical groove.

10. A drill bit according to claim 9, wherein the helical groove is provided as a reverse spiral thread.

11. A drill bit according to any of the preceding claims, wherein the hollow body portion (14) has an external diameter in the range 3 to 16mm.

12. A drill bit according to any of claims 1 to 10, wherein the hollow body portion (14) has an external diameter in the range 3 to 7mm.

13. A drill bit according to any of the preceding claims when used with a drilling tool operating between 500 to 30,000 rpm.
